# EUROPÄISCHE PATENTSCHRIFT

(11) **EP 4 197 835 B1**
(45) Veröffentlichungstag und Bekanntmachung des Hinweises auf die Patenterteilung: **07.08.2024**
(21) Anmeldenummer: 22202340.0
(22) Anmeldetag: 19.10.2022
(51) Int. Cl.: B60J 1/17, B60J 10/75, B60J 10/30

(54) **SCHEIBENANORDNUNG UND FAHRZEUG**
WINDOW ASSEMBLY AND VEHICLE
ENSEMBLE VITRE ET VÉHICULE

(30) Priorität: 15.12.2021 DE 102021133163
(43) Veröffentlichungstag der Anmeldung: 21.06.2023
(73) Patentinhaber: Audi AG, 85045 Ingolstadt (DE)
(72) Erfinder: KITTEL, Steffen, 88427 Bad Schussenried (DE)

(56) Entgegenhaltungen:
- DE-A1- 102015 007 449
- DE-A1- 102020 101 800
- JP-A- S61 178 219
- US-A- 5 253 453

## Beschreibung

Die Erfindung betrifft eine Scheibenanordnung mit einer beweglichen Scheibe sowie ein Fahrzeug mit mindestens einer solchen Scheibenanordnung.

Scheibenanordnungen mit einer beweglichen Scheibe für Fahrzeuge sind in zahlreichen Variationen bekannt. In der Regel sind die beweglichen Scheiben jeweils in einem Aufnahmeschacht einer Fahrzeugtür angeordnet.

Aus der US 5,253,453 A ist eine Dichtungsanordnung für eine heb- und senkbare Fensterscheibe einer Fahrzeugkarosserie bekannt. Das Karosserieblech an der Außenseite der Tür trägt eine Dichtung. Diese Dichtung hat einen integralen Scharnierbereich und die inhärente Elastizität des Materials spannt die Dichtung in eine Position vor, in der eine Lippe der Dichtung gegen die Fensterscheibe abdichtet. Wenn ein Motor eingeschaltet wird, drücken Schubstangen das Ende eines Schenkels der Dichtung nach oben und schwenken die Lippe von der Fensterscheibe weg, so dass diese leicht angehoben oder abgesenkt werden kann. Der Schenkel ist mit einem Metallstreifen verstärkt, um die Übertragung der von der Schubstange erzeugten Kraft auf die Lippe zu ermöglichen.

Aus der DE 10 2015 007 449 A1 ist eine Dichtungsanordnung (38) für ein Fenster bekannt, welches eine Öffnung und eine Scheibe aufweist, die relativ zur Öffnung zu verschieben ist. Die Dichtungsanordnung weist ein elastisch verformbares Dichtmodul, das entlang eines Rands der Öffnung angeordnet ist, und mindestens ein Stellmodul auf, das dem Dichtmodul zugeordnet ist. Das mindestens eine Stellmodul ist dazu ausgebildet, eine Dichtfläche des Dichtmoduls in einer ersten Betriebsstellung auf einer Oberfläche der Scheibe anzuordnen und die Dichtfläche des Dichtmoduls in einer zweiten Betriebsstellung von der Oberfläche der Scheibe wegzudrücken.

Aus der DE 10 2020 101 800 A1 ist ein Personenkraftwagen mit einer UV-C-Lichtquelle bekannt. Zum Zwecke einer verbesserten Reinigung bzw. Desinfektion eines Fahrzeuginnenraumes eines Personenkraftwagens mit mindestens einer in einem Dachbereich des Fahrzeuginnenraumes angeordneten UV-C-Lichtquelle, ist vorgesehen, dass die UV-C-Lichtquelle in dem Dachbereich beweglich und/oder an einer in dem Dachbereich befindlichen stationär beweglichen Aufnahme angeordnet ist.

Aus der JP S61 178219 A ist eine Dichtungsvorrichtung für eine Fensterscheibe eines Fahrzeugs, mit einem elektrischen Beschlagschutz bekannt, welcher einen auf eine Oberfläche der Fensterscheibe aufgebrachten Heizdraht umfasst. Die Fensterscheibe kann mittels einer elektrischen Fensterhebervorrichtung geöffnet oder geschlossen werden. Die Dichtungsvorrichtung umfasst ein Dichtungselement, welches gegen die Oberfläche der Fensterscheibe gedrückt wird und so konfiguriert ist, dass es bei Bedarf von der Oberfläche der Fensterscheibe zurückgezogen werden kann. Zum Durchführen des Rückziehvorgangs des Dichtungselements ist ein Rückzugsmechanismus vorgesehen, welche mit einem Antrieb der elektrischen Fensterhebervorrichtung verbunden ist. Der Rückzugsmechanismus des Dichtungselements ist beispielsweise als Drehmechanismus oder als Translationsmechanismus ausgeführt. Um eine Beschädigung des Heizdrahts beim Öffnen und Schließen der Fensterscheibe zu verhindern, wird das Dichtungselement durch den Rückzugsmechanismus bei einer Bewegung der Fensterscheibe von der Oberfläche der Fensterscheibe abgehoben.

Zudem ist es bekannt mittels einer speziellen Scheibenbeschichtung die Innenraumluft zu reinigen bzw. zu desinfizieren. Durch die Beschichtung der Innenseiten der Fahrzeugverglasung, beispielsweise mit titanoxidbasierten Verbindungen, kann ein höherer Reinheitsgrad sowohl von biologischen Pathogenen, wie Viren und Bakterien, als auch von Feinstaub und weiterer Bestandteile erreicht werden. Die Titanoxidbeschichtung ist allerdings nicht selektiv und zersetzt nicht nur die unerwünschten Substanzen, sondern auch beispielsweise Dichtungsgummis. Dies stellt an den feststehenden Scheiben, wie einer Frontscheibe oder Heckscheibe kein Problem dar, da diese nicht bewegt werden und durch Aussparen der entsprechenden Scheibenbereiche ein Zersetzen der Dichtungen verhindert werden kann. Bei beweglichen Scheiben ist dies allerdings nicht möglich, da diese nicht stets komplett geöffnet oder komplett geschlossen sind. Ist die bewegliche Scheibe beispielsweise nur halb geöffnet, dann liegt der Dichtungsgummi flächig auf dem beschichteten Bereich der beweglichen Scheibe auf und wird angegriffen.

Der Erfindung liegt die Aufgabe zu Grunde, eine Scheibenanordnung mit einer beweglichen Scheibe und ein Fahrzeug mit einer solchen Scheibenanordnung bereitzustellen, welche ein Aufliegen einer Dichtung auf einem mit einer desinfizierenden Innenbeschichtung beschichteten Bereich der beweglichen Scheibe verhindert.

Diese Aufgabe wird durch eine Scheibenanordnung mit den Merkmalen des Patentanspruchs 1 und durch ein Fahrzeug mit den Merkmalen des Patentanspruchs 10 gelöst. Vorteilhafte Ausgestaltungen mit zweckmäßigen Weiterbildungen der Erfindung sind in den abhängigen Patentansprüchen angegeben.

Um eine Scheibenanordnung mit einer beweglichen Scheibe bereitzustellen, welche ein Aufliegen einer Dichtung auf einem mit einer desinfizierenden Innenbeschichtung beschichteten Bereich der beweglichen Scheibe verhindert, ist eine Koppelvorrichtung ausgeführt, die mindestens eine Dichtung in der Offenstellung und in der Geschlossenstellung mit einem unbeschichteten Bereich der Scheibe dichtend zu koppeln und die mindestens eine Dichtung während einer Bewegung der Scheibe und in Stellungen der Scheibe zwischen einer Offenstellung und einer Geschlossenstellung von der Scheibe abzuheben.

Zudem wird ein Fahrzeug mit mindestens einer solchen Scheibenanordnung vorgeschlagen. Hierbei ist die mindestens eine Scheibenanordnung in einem Aufnahmeschacht einer Fahrzeugtür angeordnet.

Unter der Scheibenanordnung mit einer beweglichen Scheibe wird nachfolgend eine Anordnung verstanden, bei der die bewegliche Scheibe eine desinfizierende Innenbeschichtung aufweist. Zudem umfasst eine solche Scheibenanordnung einen Antrieb, welcher die Scheibe zwischen der Offenstellung und der Geschlossenstellung bewegt, und eine Dichtungsanordnung, welche die mindestens eine Dichtung zum Abdichten der Scheibe umfasst.

Als desinfizierende Innenbeschichtung der Scheiben in einem Fahrzeug können vorzugsweise titanoxidbasierte Verbindungen verwendet werden. Selbstverständlich können auch andere geeignete Materialen eingesetzt werden, um einen höheren Reinheitsgrad im Innenraum sowohl von biologischen Pathogenen, wie Viren und Bakterien, als auch von Feinstaub und weiterer Bestandteile zu erreichen.

Durch die zusätzliche Innenbeschichtung der beweglichen Scheiben in einem Fahrzeug mit einer desinfizierenden Verbindung kann die wirksame Desinfektionsfläche zur Reinigung der Innenluft einfach vergrößert werden. Durch die Koppelvorrichtung kann die mindestens eine Dichtung der beweglichen Scheibe bei Teilöffnung der Scheibe von der Oberfläche der Scheibe abgehoben werden, so dass kein Kontakt mehr vorhanden ist, wenn die Dichtung über der Innenbeschichtung der Scheibe angeordnet ist. Ist die Scheibe komplett geöffnet oder geschlossen liegt die mindestens eine Dichtung wieder an der Oberfläche der Scheibe an, welche in den Randbereichen keine desinfizierende Innenbeschichtung aufweist.

In vorteilhafter Ausgestaltung der Scheibenanordnung kann die Koppelvorrichtung eine ortsfeste Hebeführung, welche parallel zur Bewegungsrichtung der Scheibe ausgerichtet ist, und eine beweglich gelagerte Zugstange umfassen, welche im unbelasteten Zustand parallel zur Hebeführung ausgerichtet und über ein bewegliches Koppelelement mit der Hebeführung gekoppelt ist. Dies ermöglicht eine besonders einfache und kostengünstige Umsetzung der Koppelvorrichtung.

In weiterer vorteilhafter Ausgestaltung der Scheibenanordnung kann die Zugstange an einem Ende an einer Befestigungsstelle drehbeweglich gelagert sein und ein abgekröpftes freies Ende aufweisen, welches mit der mindestens einen Dichtung gekoppelt ist. Vorzugsweise kann das abgekröpfte freie Ende der Zugstange über ein Federelement mit der mindestens einen Dichtung gekoppelt sein. Das Federelement bewirkt, dass die mindestens eine Dichtung in der Geschlossenstellung und in der Offenstellung der Scheibe mit einer konstanten Kraft gegen die Oberfläche der Scheibe gedrückt wird.

In weiterer vorteilhafter Ausgestaltung der Scheibenanordnung kann die ortsfeste Hebeführung eine Führungsbahn für das bewegliche Koppelelement ausbilden, welche an einer ersten Endposition und an einer zweiten Endposition für das bewegliche Koppelelement jeweils eine Vertiefung in Richtung Scheibe aufweist. Hierbei kann das Koppelelement beim Eintauchen in eine der Vertiefungen eine Zugkraft bewirken, welche das abgekröpfte freie Ende der Zugstange in Richtung Scheibe kippt, und beim Ausfahren aus der jeweiligen Vertiefungen kann das Koppelelement eine Schubkraft bewirken, welche das abgekröpfte freie Ende der Zugstange von der Scheibe wegkippt.

In weiterer vorteilhafter Ausgestaltung der Scheibenanordnung kann das abgekröpfte freie Ende der Zugstange die mindestens eine Dichtung beim Eintauchen des beweglichen Koppelelements in eine der Vertiefungen in Richtung Scheibe bewegen und mit einer vorgebbaren Kraft dichtend gegen einen korrespondierenden unbeschichteten Bereich der Scheibe drücken. Zudem kann das abgekröpfte freie Ende der Zugstange die mindestens eine Dichtung beim Ausfahren des beweglichen Koppelelements aus der jeweiligen Vertiefungen von der Scheibe abheben.

In weiterer vorteilhafter Ausgestaltung der Scheibenanordnung kann das Koppelelement so mit dem Antrieb der Scheibe gekoppelt sein, dass das Koppelelement in der Geschlossenstellung der Scheibe in der ersten Endposition und einer ersten Vertiefung der Führungsbahn positioniert ist, und in der Offenstellung der Scheibe in der zweiten Endposition und einer zweiten Vertiefung der Führungsbahn positioniert ist.

Die für die erfindungsgemäße Scheibenanordnung beschriebenen Vorteile und bevorzugten Ausführungsformen gelten auch für das erfindungsgemäße Fahrzeug.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen. Hierbei zeigen:
- Fig. 1: eine schematische und ausschnittsweise Schnittdarstellung eines Ausführungsbeispiels eines erfindungsgemäßen Fahrzeugs im Bereich einer Fahrzeugtür mit einem Ausführungsbeispiel einer erfindungsgemäßen Scheibenanordnung; und
- Fig. 2: eine schematische Schnittdarstellung eines Ausführungsbeispiels einer Dichtungsanordnung der erfindungsgemäßen Scheibenanordnung aus Fig. 1.

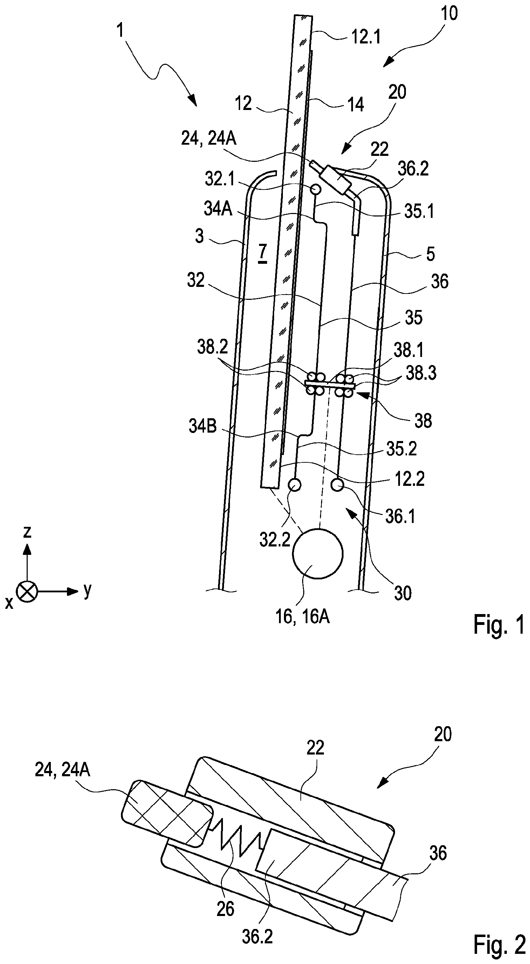

Wie aus Fig. 1 ersichtlich ist, zeigt der dargestellte Ausschnitt eines erfindungsgemäßen Fahrzeugs eine Fahrzeugtür 1 mit einer erfindungsgemäßen Scheibenanordnung 10. Hierbei ist die Scheibenanordnung 10 in einem Aufnahmeschacht 7 der Fahrzeugtür 1 angeordnet, welcher durch ein Außenblech 3 und ein Innenblech 5 der Fahrzeugtür 1 begrenzt ist. Wie aus Fig. 1 weiter ersichtlich ist, dichtet die dargestellte Scheibenanordnung 10 das Innenblech 5 der Fahrzeugtür 1 am oberen Ende des Aufnahmeschachtes 7 gegen die Scheibe 12 ab.

Wie aus Fig. 1 und 2 weiter ersichtlich ist, umfasst das dargestellte Ausführungsbeispiel der erfindungsgemäßen Scheibenanordnung 10 eine bewegliche Scheibe 12, welche eine desinfizierende Innenbeschichtung 14 aufweist, einen Antrieb 16, welcher die Scheibe 12 zwischen einer Offenstellung und einer Geschlossenstellung bewegt, und eine Dichtungsanordnung 20, welche mindestens eine Dichtung 24 zum Abdichten der Scheibe 12 umfasst. Hierbei koppelt eine Koppelvorrichtung 30 die mindestens eine Dichtung 24 in der Offenstellung und in der Geschlossenstellung dichtend mit einem unbeschichteten Bereich 12.1, 12.2 der Scheibe 12. Während einer Bewegung der Scheibe 12 und in Stellungen der Scheibe 12 zwischen der Offenstellung und der Geschlossenstellung hebt die Koppelvorrichtung 30 die mindestens eine Dichtung 24 von der Scheibe 12 ab.

Wie aus Fig. 1 weiter ersichtlich ist, umfasst die Koppelvorrichtung 30 im dargestellten Ausführungsbeispiel der Scheibenanordnung 10 eine ortsfeste Hebeführung 32, welche im Aufnahmeschacht 7 der Fahrzeugtür 1 parallel zur Bewegungsrichtung der Scheibe 12 ausgerichtet ist, und eine beweglich gelagerte Zugstange 36, welche im unbelasteten Zustand parallel zur Hebeführung ausgerichtet und über ein bewegliches Koppelelement 38 mit der Hebeführung 32 gekoppelt ist. Die Hebeführung 32 ist an einer oberen Befestigungsstelle 32.1 und an einer unteren Befestigungsstelle 32.2 mit der Fahrzeugtür 1 verschraubt. Selbstverständlich können auch andere geeignete Befestigungstechniken verwendet werden, um die Hebeführung 32 zu befestigen.

Wie aus Fig. 1 weiter ersichtlich ist, ist die Zugstange 36 im dargestellten Ausführungsbeispiel der Scheibenanordnung 10 an einem Ende an einer Befestigungsstelle 36.1 drehbeweglich an der Fahrzeugtür gelagert und weist ein abgekröpftes freies Ende 36.2 auf, welches mit der mindestens einen Dichtung 24 gekoppelt ist. Die ortsfeste Hebeführung 32 bildet eine Führungsbahn 35 für das bewegliche Koppelelement 38 aus, welche an einer ersten Endposition 34A und an einer zweiten Endposition 34B für das bewegliche Koppelelement 38 jeweils eine Vertiefung 35.1, 35.2 in Richtung Scheibe 12 aufweist. Beim Eintauchen in eine der Vertiefungen 35.1, 35.2 bewegt das Koppelelement 38 das abgekröpfte freie Ende 36.2 der Zugstange 36 in Richtung Scheibe 12. Beim Ausfahren aus der jeweiligen Vertiefungen 35.1, 35.2 bewegt das Koppelelement 38 das abgekröpfte freie Ende 36.2 der Zugstange 36 weg von der Scheibe 12. Mittels der Hebeführung 32 und dem Koppelelement 38 wird eine Kippstellung der drehbeglich gelagerten Zugstange 36 und somit auch die Position der mindestens einen Dichtung 34 eingestellt. Durch die drehbewegliche Lagerung der Zugstange 36 an der Befestigungsstelle 36.1 wirkt beim Eintauchen des beweglichen Koppelelements 38 in eine der Vertiefungen 35.1, 35.2 eine Zugkraft auf die Zugstange 36, welche das abgekröpfte freie Ende 36.2 der Zugstange 36 in Richtung Scheibe 12 kippt, so dass das freie Ende 36.2 der Zugstange 36 die mindestens eine Dichtung 24 mit einer vorgebbaren Kraft dichtend gegen einen korrespondierenden unbeschichteten Bereich 12.1, 12.2 der Scheibe 12 drückt. Wie aus Fig. 1 weiter ersichtlich ist, ist ein erster unbeschichteter Bereich 12.1 der Scheibe 12 an einem oberen Rand der Scheibe 12 ausgebildet. Ein zweiter unbeschichteter Bereich 12.2 ist an einem unteren Rand der Scheibe 12 ausgebildet. Beim Ausfahren des beweglichen Koppelelements 38 aus der korrespondierenden Vertiefung 35.1, 35.2 wirkt eine Schubkraft auf die Zugstange 36, welche das abgekröpfte freie Ende 36.2 der Zugstange 36 von der Scheibe 12 wegkippt, so dass das abgekröpfte freie Ende 36.2 der Zugstange 36 die mindestens eine Dichtung 24 von der Scheibe 12 abhebt.

Wie aus Fig. 1 weiter ersichtlich ist, ist das Koppelelement 38 über eine gestrichelt dargestellte Wirkverbindung so mit dem Antrieb 16 der Scheibe 12 gekoppelt, dass das Koppelelement 38 in der Geschlossenstellung der Scheibe 12 in der ersten Endposition 34A und in einer ersten Vertiefung 35.1 der Führungsbahn 35 positioniert ist. In der Offenstellung der Scheibe 12 ist das Koppelelement 38 in der zweiten Endposition 34B und einer zweiten Vertiefung 35.2 der Führungsbahn 35 positioniert. Zwischen der Geschlossenstellung und der Offenstellung der Scheibe 12 verschiebt der Antrieb 16 die Scheibe 12 vertikal in negative z-Richtung nach unten, wobei das Koppelelement 38 ausgehend von der ersten Endposition 34A aus der ersten Vertiefung 35.1 in negativer z-Richtung in Richtung zweite Vertiefung 35.2 verschoben wird. Zwischen der Offenstellung und der Geschlossenstellung der Scheibe 12 verschiebt der Antrieb 16 die Scheibe 12 vertikal in positive z-Richtung nach oben, wobei das Koppelelement 38 ausgehend von der zweiten Endposition 34B aus der zweiten Vertiefung 35.2 in positiver z-Richtung in Richtung erste Vertiefung 35.1 verschoben wird. Im dargestellten Ausführungsbeispiel umfasst das Koppelelement 38 eine Koppelstange 38.1, an deren Enden jeweils mehrere Führungsrollen 38.2, 38.3 angeordnet sind. Hierbei sind erste Führungsrollen 38.2 an einem ersten Ende der Koppelstange 38.1 mit der Hebeführung 32 gekoppelt und rollen auf dieser ab. Zweite Führungsrollen 38.3 an einem zweiten Ende der Koppelstange 38.1 sind mit der Zugstange 36 gekoppelt und rollen auf dieser ab. Im dargestellten Ausführungsbeispiel sind jeweils zwei erste Führungsrollen 38.2 auf den beiden Seiten der Hebeführung 32 und zwei zweite Führungsrollen 38.3 auf den beiden Seiten der Zugstange 36 angeordnet. Zudem ist die Koppelstange 38.1 mit dem Antrieb 16 gekoppelt.

Wie aus Fig. 2 weiter ersichtlich ist, ist das freie Ende 36.2 der Zugstange 36 im dargestellten Ausführungsbeispiel über ein Federelement 26 mit der mindestens einen Dichtung 24 gekoppelt. Hierbei sind die mindestens eine Dichtung 24, welche im dargestellten Ausführungsbeispiel als Dichtungsgummi 24A ausgeführt ist, das Federelement 26 und das freie Ende 36.2 der Zugstange 36 zumindest teilweise von einer Dichtungsaufnahme 22 aufgenommen, welche im dargestellten Ausführungsbeispiel als Hülse ausgeführt ist. Eine Wandung der Dichtungsaufnahme 22 führt die Dichtung 24 und das freie Ende 36.2 der Zugstange 36 bei der Bewegung in Richtung Scheibe 12 und bei der Bewegung weg von der Scheibe 12.

### BEZUGSZEICHENLISTE

- 1: Fahrzeugtür
- 3: Außenblech
- 5: Innenblech
- 7: Aufnahmeschacht
- 10: Scheibenanordnung
- 12: bewegliche Scheibe
- 12.1, 12.2: unbeschichteter Bereich
- 14: desinfizierende Innenbeschichtung
- 16: Antrieb
- 16A: Elektromotor
- 20: Dichtungsanordnung
- 22: Dichtungsaufnahme
- 24: Dichtung
- 24A: Dichtungsgummi
- 26: Federelement
- 30: Koppelvorrichtung
- 32: Hebeführung
- 32.1, 32.2: Befestigungsstelle
- 34A, 34B: Endposition
- 35: Führungsbahn
- 35.1, 35.2: Vertiefung
- 36: Zugstange
- 36.1: Befestigungsstelle
- 36.2: freies Ende
- 38: Koppelelement
- 38.1: Koppelstange
- 38.2, 38.3: Führungsrolle
- x: Längsrichtung
- y: Querrichtung
- z: Hochrichtung

## Patentansprüche

1. Scheibenanordnung (10) mit einer beweglichen Scheibe (12), welche eine desinfizierende Innenbeschichtung (14) aufweist, einem Antrieb (16), welcher die Scheibe (12) zwischen einer Offenstellung und einer Geschlossenstellung bewegt, und einer Dichtungsanordnung (20), welche mindestens eine Dichtung (24) zum Abdichten der Scheibe (12) umfasst, wobei eine Koppelvorrichtung (30) ausgeführt ist, die mindestens eine Dichtung (24) in der Offenstellung und in der Geschlossenstellung mit einem unbeschichteten Bereich (12.1, 12.2) der Scheibe (12) dichtend zu koppeln und die mindestens eine Dichtung (24) während einer Bewegung der Scheibe (12) und in Stellungen der Scheibe (12) zwischen der Offenstellung und der Geschlossenstellung von der Scheibe (12) abzuheben.

2. Scheibenanordnung (10) nach Anspruch 1,
**dadurch gekennzeichnet,**
**dass** die Koppelvorrichtung (30) eine ortsfeste Hebeführung (32), welche parallel zur Bewegungsrichtung der Scheibe (12) ausgerichtet ist, und eine beweglich gelagerte Zugstange (36) umfasst, welche im unbelasteten Zustand parallel zur Hebeführung (32) ausgerichtet und über ein bewegliches Koppelelement (38) mit der Hebeführung (32) gekoppelt ist.

3. Scheibenanordnung (10) nach Anspruch 2,
**dadurch gekennzeichnet,**
**dass** die Zugstange (36) an einem Ende an einer Befestigungsstelle (36.1) drehbeweglich gelagert ist und ein abgekröpftes freies Ende (36.2) aufweist, welches mit der mindestens einen Dichtung (24) gekoppelt ist.

4. Scheibenanordnung (10) nach Anspruch 3,
**dadurch gekennzeichnet,**
**dass** das abgekröpfte freie Ende (36.2) der Zugstange (36) über ein Federelement (26) mit der mindestens einen Dichtung (24) gekoppelt ist.

5. Scheibenanordnung (10) nach Anspruch 3 oder 4,
**dadurch gekennzeichnet,**
**dass** die ortsfeste Hebeführung (32) eine Führungsbahn (35) für das bewegliche Koppelelement (38) ausbildet, welche an einer ersten Endposition (34A) und an einer zweiten Endposition (34B) für das bewegliche Koppelelement (38) jeweils eine Vertiefung (35.1, 35.2) in Richtung Scheibe (12) aufweist.

6. Scheibenanordnung (10) nach Anspruch 5,
**dadurch gekennzeichnet,**
**dass** das Koppelelement (38) beim Eintauchen in eine der Vertiefungen (35.1, 35.2) eine Zugkraft bewirkt, welche das abgekröpfte freie Ende (36.2) der Zugstange (36) in Richtung Scheibe (12) kippt, und beim Ausfahren aus der jeweiligen Vertiefungen (35.1, 35.2) eine Schubkraft bewirkt, welche das abgekröpfte freie Ende (36.2) der Zugstange (36) von der Scheibe (12) wegkippt.

7. Scheibenanordnung (10) nach Anspruch 6,
**dadurch gekennzeichnet,**
**dass** das abgekröpfte freie Ende (36.2) der Zugstange (36) die mindestens eine Dichtung (24) beim Eintauchen des beweglichen Koppelelements (38) in eine der Vertiefungen (35.1, 35.2) in Richtung Scheibe (12) bewegt und mit einer vorgebbaren Kraft dichtend gegen einen korrespondierenden unbeschichteten Bereich (12.1, 12.2) der Scheibe (12) drückt.

8. Scheibenanordnung (10) nach Anspruch 6 oder 7,
**dadurch gekennzeichnet,**
**dass** das abgekröpfte freie Ende (36.2) der Zugstange (36) die mindestens eine Dichtung (24) beim Ausfahren des beweglichen Koppelelements (38) aus der jeweiligen Vertiefungen (35.1, 35.2) von der Scheibe (12) abhebt.

9. Scheibenanordnung (10) nach einem der Ansprüche 5 bis 8,
**dadurch gekennzeichnet,**
**dass** das Koppelelement (38) so mit dem Antrieb (16) der Scheibe (12) gekoppelt ist, dass das Koppelelement (38) in der Geschlossenstellung der Scheibe (12) in der ersten Endposition (34A) und einer ersten Vertiefung (35.1) der Führungsbahn (35) positioniert ist, und in der Offenstellung der Scheibe (12) in der zweiten Endposition (34B) und einer zweiten Vertiefung (35.2) der Führungsbahn (35) positioniert ist,

10. Fahrzeug mit mindestens einer Scheibenanordnung (10), welche nach einem der Ansprüche 1 bis 9 ausgeführt ist, wobei die mindestens einen Scheibenanordnung (10) in einem Aufnahmeschacht (7) einer Fahrzeugtür (1) angeordnet ist.

## Claims

1. Window assembly (10) having a movable window pane (12) which has a disinfecting inner coating (14), a drive (16) which moves the window pane (12) between an open position and a closed position, and a sealing arrangement (20) which comprises at least one seal (24) for sealing the window pane (12), wherein a coupling device (30) is configured to couple the at least one seal (24) in the open position and in the closed position with a non-coated region (12.1, 12.2) of the window pane (12) sealingly and to lift the at least one seal (24) during a movement of the window pane (12) and impositions of the window pane (12) between the open position and the closed position of the window pane (12).

2. Window assembly (10) according to claim 1,
**characterized in that**
the coupling device (30) comprises a stationary lift guide (32) which is aligned parallel to the direction of movement of the window pane (12), and a movably mounted pull rod (36), which, in the unloaded state, is aligned parallel to the lift guide (32) and is coupled via the movable coupling element (38) to the lift guide (32).

3. Window assembly (10) according to claim 2,
**characterized in that**
the pull rod (36) is mounted in a rotationally movable manner at one end at a fastening point (36.1) and has a bent free end (36.2) which is coupled with the at least one seal (24).

4. Window assembly (10) according to claim 3,
**characterized in that**
the bent free end (36.2) of the pull rod (36) is coupled to the at least one seal (24) via a spring element (26).

5. Window assembly (10) according to claim 3 or 4,
**characterized in that**
the stationary lift guide (32) forms a guide track (35) for the movable coupling element (38), which guide track has at a first end position (34A) and at a second end position (34B), respectively, an indentation (35.1, 35.2) in the direction of the window pane (12) for the movable coupling element (38).

6. Window assembly (10) according to claim 5,
**characterized in that**
when the coupling element (38) dips into one of the indentations (35.1, 35.2) it effects a tensile force which tilts the bent free end (36.2) of the pull rod (36) in the direction of the window pane (12), and when it emerges out of the respective indentations (35.1, 35.2) it effects a thrust which tilts the bent free end (36.2) of the pull rod (36) away from the window pane (12).

7. Window assembly (10) according to claim 6,
**characterized in that**
when the movable coupling element (38) dips into one of the indentations (35.1, 35.2), the bent free end (36.2) of the pull rod (36) moves the at least one seal (24) in the direction of the window pane (12) and presses it with a predeterminable force sealingly against a corresponding non-coated region (12.1, 12.2) of the window pane (12).

8. Window assembly (10) according to claim 6 or 7,
**characterized in that**
when the movable coupling element (38) emerges out of the respective indentations (35.1, 35.2), the bent free end (36.2) of the pull rod (36) lifts the at least one seal (24) away from the window pane (12).

9. Window assembly (10) according to any of claims 5 to 8,
**characterized in that**
the coupling element (38) is coupled to the drive (16) of the window pane (12) such that the coupling element (38) in the closed position of the window pane (12) is positioned in the first end position (34A) and a first indentation (35.1) of the guide track (35), and in the open position of the window pane (12) is positioned in the second end position (34B) and a second indentation (35.2) of the guide track (35).

10. Vehicle having at least one window assembly (10) which is designed according to any of claims 1 to 9, wherein the at least one window assembly (10) is arranged in a receiving shaft (7) in a vehicle door (1).

## Revendications

1. Ensemble vitre (10) avec une vitre mobile (12) qui présente un revêtement intérieur (14) désinfectant, un entraînement (16) qui déplace la vitre (12) entre une position ouverte et une position fermée, et un ensemble d'étanchéité (20) qui comprend au moins un joint d'étanchéité (24) pour rendre étanche la vitre (12), dans lequel un dispositif de couplage (30) est réalisé afin de coupler de manière étanche l'au moins un joint d'étanchéité (24) dans la position ouverte et dans la position fermée à une zone (12.1, 12.2) non revêtue de la vitre (12) et de lever l'au moins un joint d'étanchéité (24) pendant un déplacement de la vitre (12) et dans des positions de la vitre (12) entre la position ouverte et la position fermée de la vitre (12).

2. Ensemble vitre (10) selon la revendication 1,
**caractérisé en ce que**
le dispositif de couplage (30) comprend un guidage de levage (32) fixe qui est orienté parallèlement au sens de déplacement de la vitre (12) et une tige de traction (36) logée de manière mobile qui est orientée, dans l'état non sollicité, parallèlement au guidage de levage (32) et est couplée au guidage de levage (32) par le biais d'un élément de couplage (38) mobile.

3. Ensemble vitre (10) selon la revendication 2,
**caractérisé en ce que**
la tige de traction (36) est logée de manière mobile en rotation à une extrémité au niveau d'un point de fixation (36.1) et présente une extrémité (36.2) libre coudée qui est couplée à l'au moins un joint d'étanchéité (24).

4. Ensemble vitre (10) selon la revendication 3,
**caractérisé en ce que**
l'extrémité (36.2) libre coudée de la tige de traction (36) est couplée à l'au moins un joint d'étanchéité (24) par le biais d'un élément de ressort (26).

5. Ensemble vitre (10) selon la revendication 3 ou 4,
**caractérisé en ce que**
le guidage de levage (32) fixe réalise une bande de guidage (35) pour l'élément de couplage (38) mobile, guidage qui présente pour l'élément de couplage (38) mobile respectivement une cavité (35.1, 35.2) en direction de la vitre (12) au niveau d'une première position terminale (34A) et au niveau d'une seconde position terminale (34B).

6. Ensemble vitre (10) selon la revendication 5,
**caractérisé en ce que**
l'élément de couplage (38) provoque une force de traction lors de l'enfoncement dans une des cavités (35.1, 35.2), force qui bascule l'extrémité libre coudée (36.2) de la tige de traction (36) en direction de la vitre (12) et provoque lors de la sortie des cavités (35.1, 35.2) respectives une force de poussée qui bascule l'extrémité (36.2) libre coudée de la tige de traction (36) loin de la vitre (12).

7. Ensemble vitre (10) selon la revendication 6,
**caractérisé en ce que**
l'extrémité (36.2) libre coudée de la tige de traction (36) déplace l'au moins un joint d'étanchéité (24) lors de l'enfoncement de l'élément de couplage (38) mobile dans une des cavités (35.1, 35.2) en direction de la vitre (12) et presse avec une force prédéfinissable de manière étanche contre une zone (12.1, 12.2) non revêtue correspondante de la vitre (12).

8. Ensemble vitre (10) selon la revendication 6 ou 7,
**caractérisé en ce que**
l'extrémité (36.2) libre coudée de la tige de traction (36) lève l'au moins un joint d'étanchéité (24) lors de la sortie de l'élément de couplage (38) mobile des cavités (35.1, 35.2) respectives de la vitre (12).

9. Ensemble vitre (10) selon l'une quelconque des revendications 5 à 8,
**caractérisé en ce que**
l'élément de couplage (38) est couplé à l'entraînement (16) de la vitre (12) de sorte que l'élément de couplage (38) soit positionné dans la position fermée de la vitre (12) dans la première position terminale (34A) et une première cavité (35.1) de la bande de guidage (35), et soit positionné dans la position ouverte de la vitre (12) dans la seconde position terminale (34B) et une seconde cavité (35.2) de la bande de guidage (35).

10. Véhicule avec au moins un ensemble vitre (10) qui est réalisé selon l'une quelconque des revendications 1 à 9, dans lequel l'au moins un ensemble vitre (10) est agencé dans un puits de réception (7) d'une porte de véhicule (1).
